# EUROPEAN PATENT APPLICATION

(11) **EP 4 664 285 A1**
(43) Date of publication of application: **17.12.2025**
(21) Application number: 24766240.6
(22) Date of filing: 02.02.2024
(51) Int. Cl.: G06F 9/48

(54) **RESOURCE SCHEDULING METHOD AND ELECTRONIC DEVICE**

(30) Priority: 09.03.2023 CN 202310271542
(71) Applicant: Huawei Technologies Co., Ltd., Shenzhen, Guangdong 518129 (CN)
(72) Inventor: WANG, Jingjin, Shenzhen, Guangdong 518129 (CN); HU, Zhaodong, Shenzhen, Guangdong 518129 (CN); CHENG, Jian, Shenzhen, Guangdong 518129 (CN); WANG, Shuo, Shenzhen, Guangdong 518129 (CN); WANG, Hui, Shenzhen, Guangdong 518129 (CN); WANG, Li, Shenzhen, Guangdong 518129 (CN); WANG, Xiayang, Shenzhen, Guangdong 518129 (CN); DAI, Li, Shenzhen, Guangdong 518129 (CN)
(74) Representative: MERH-IP Matias Erny Reichl Hoffmann Patentanwälte PartG mbB
(86) International application number: PCT/CN2024/075525
(87) International publication number: WO 2024/183518

(57) **Abstract**

Embodiments of this application provide a resource scheduling method and an electronic device, and relate to the field of terminal technologies, to dynamically adjust, on a per-thread basis of a thread included in each application program, a resource allocated by the electronic device to the application program. In the method, a level of each first thread corresponding to a first application program and a scheduling parameter corresponding to each level are set, so that a resource can be allocated to each first thread on a per-thread basis of each first thread included in the first application program. When a running status of the first application program changes, a level of a first thread in a running state may remain unchanged, and the scheduling parameter corresponding to each level is adjusted, to differently increase or reduce an allocated resource for each first thread. This application is applied to a process in which the electronic device allocates a resource to an application program.

## Description

This application claims priority to Chinese Patent Application No. 202310271542.1, filed with the China National Intellectual Property Administration on March 9, 2023 and entitled "RESOURCE SCHEDULING METHOD AND ELECTRONIC DEVICE", which is incorporated herein by reference in its entirety.

### TECHNICAL FIELD

This application relates to the field of terminal technologies, and in particular, to a resource scheduling method and an electronic device.

### BACKGROUND

During running of application programs, an electronic device may provide, for the application programs, a hardware resource used to support running of the application programs.

In a running process of the application programs, the electronic device may identify a running status of the application programs, and improve or reduce overall performance of the electronic device based on the running status of the application programs. For example, an operating frequency of the hardware resource, for example, a central processing unit (central processing unit, CPU), in the electronic device is increased or reduced.

However, improvement of the overall performance of the electronic device increases power consumption of the electronic device, and reduction of the overall performance of the electronic device easily affects smoothness of running of the application program.

### SUMMARY

Embodiments of this application provide a resource scheduling method and an electronic device, to dynamically adjust, on a per-thread basis of a thread included in an application program, a resource allocated by the electronic device to the application program.

To achieve the foregoing objective, the following technical solutions are used in embodiments of this application.

According to a first aspect, an embodiment of this application provides a resource scheduling method. The method may be applied to an electronic device. In the method, a level of at least one first thread is determined when it is detected that a running status of a first application program is switched from a first state to a second state. The at least one first thread is used to run the first application program. The level is a relative level of each first thread corresponding to the first application program. A scheduling parameter corresponding to each level is determined based on the level of the first thread. The scheduling parameter is used to allocate a resource to the first thread having the corresponding level. Scheduling parameters corresponding to different levels are different. The resource is allocated to the first thread based on the scheduling parameter corresponding to the level of the first thread.

In the method of this application, when the running status of the first application program changes, the level of the first thread may remain unchanged, and the scheduling parameter corresponding to the level of the first thread is determined, to differently increase or reduce an allocated resource for each first thread.

With reference to the first aspect, in a possible design, the first thread is a thread that is in a running state and that corresponds to the first application program.

With reference to the first aspect, in a possible design, first running data is obtained when running of the first thread ends. The first running data is associated with the first thread, and the first running data includes running data of the first application program in a current running process of the first thread. The scheduling parameter corresponding to the level of the first thread is adjusted based on the first running data and second running data. The second running data is associated with the first thread, and the second running data is obtained based on running data of the first application program in a historical running process of the first thread.

In this solution, when running of the first thread ends, the scheduling parameter corresponding to the level of the first thread is adjusted based on the first running data and the second running data, so that when the first thread is run again, a resource is allocated to the first thread based on an adjusted scheduling parameter corresponding to the level of the first thread. In this way, stable running of a second thread can be ensured, and no resource waste is caused.

With reference to the first aspect, in a possible design, whether a resource needs to be reallocated to the first thread is determined based on the first running data and the second running data. When it is determined that the resource needs to be reallocated to the first thread, the scheduling parameter corresponding to the level of the first thread is adjusted.

In this solution, a condition for adjusting the scheduling parameter corresponding to the level of the first thread is provided.

With reference to the first aspect, in a possible design, normalization is performed on the first running data to obtain a first value. Normalization is performed on the second running data to obtain a second value. A ratio of the first value to the second value is determined as a third value. When the third value is greater than or equal to a fourth value, or the third value is less than or equal to a fifth value, the scheduling parameter corresponding to the level of the first thread is adjusted.

In this solution, a condition for determining whether to adjust the scheduling parameter corresponding to the level of the second thread is provided.

With reference to the first aspect, in a possible design, before the level of the at least one first thread is determined when it is detected that the running status of the first application program is switched from the first state to the second state, a setting operation input by a user is received. In response to the setting operation, the level of the at least one first thread corresponding to the first application program and a scheduling parameter corresponding to the level of the at least one first thread are set.

In this solution, a level of each first thread corresponding to the first application program and the scheduling parameter corresponding to each level are set, so that when the first application program is run, a resource can be allocated to each first thread corresponding to the first application program on a per-thread basis of a thread.

With reference to the first aspect, in a possible design, when the first application program is a third-party application program, the level of each first thread is less than a level threshold.

In this solution, it may be set that a developer of the third-party application program is only allowed to set the level of the first thread below the level threshold, to prevent the developer of the third-party application program from setting a high level for each first thread to preempt a resource and therefore cause resource contention between running threads.

According to a second aspect, an embodiment of this application provides an electronic device. The electronic device includes a memory and one or more processors. The memory is coupled to the processor, the memory is configured to store computer program code, and the computer program code includes computer instructions. When the processor executes the computer instructions, the electronic device is enabled to perform the method according to any one of the first aspect and the possible designs of the first aspect.

According to a third aspect, an embodiment of this application provides a chip system. The chip system includes one or more interface circuits and one or more processors. The interface circuit and the processor are interconnected through a line. The interface circuit is configured to: receive a signal from a memory of an electronic device, and send the signal to the processor. The signal includes computer instructions stored in the memory. When the processor executes the computer instructions, the electronic device performs the method according to any one of the first aspect and the possible designs of the first aspect.

According to a fourth aspect, an embodiment of this application provides a computer storage medium, including computer instructions. When the computer instructions are run on an electronic device, the electronic device is enabled to perform the method according to any one of the first aspect and the possible designs of the first aspect.

According to a fifth aspect, an embodiment of this application provides a computer program product. When the computer program product runs on a computer, the computer is enabled to perform the method according to any one of the first aspect and the possible designs of the first aspect.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3 is a schematic flowchart of a resource scheduling method according to an embodiment of this application;
FIG. 4 is a diagram of setting a level and a scheduling parameter according to an embodiment of this application;
FIG. 5 is a diagram of a scenario in which a status of a first application program is switched according to an embodiment of this application;
FIG. 6 is a diagram of adjusting a resource allocated to a thread according to an embodiment of this application;
FIG. 7 is a diagram of adjusting a scheduling parameter according to an embodiment of this application;
FIG. 8 is a diagram of a resource scheduling system according to an embodiment of this application; and
FIG. 9 is a diagram of an electronic device according to an embodiment of this application.

### DESCRIPTION OF EMBODIMENTS

The following describes technical solutions in embodiments of this application with reference to accompanying drawings in embodiments of this application. In descriptions of embodiments of this application, unless otherwise specified, "/" represents an "or" relationship. For example, A/B may represent A or B. "And/or" in this specification is merely an association relationship for describing associated objects, and represents that three relationships may exist. For example, A and/or B may represent the following three cases: Only A exists, both A and B exist, and only B exists. In addition, in the descriptions of embodiments of this application, "a plurality of' means two or more than two.

Terms "first" and "second" mentioned below are merely used for the purpose of description, and shall not be understood as indicating or implying relative importance or implicitly indicating a quantity of indicated technical features. Therefore, a feature limited by "first" or "second" may explicitly or implicitly include one or more such features. In the descriptions of embodiments, unless otherwise specified, "a plurality of' means two or more than two.

During running of application programs, an electronic device may provide a corresponding hardware resource (a resource for short in embodiments of this application) for the application programs, to ensure that the application programs can be run stably and smoothly. However, resources that need to be used during running of different application programs are usually different, and resources that need to be used during running of a same application program in different running states are also usually different. For example, memory space that is of the electronic device and that needs to be used during running of the application program in a background is usually less than memory space that is of the electronic device and that needs to be used during running of the application program in a foreground, and a CPU resource that needs to be used during interaction between the application program and a user in the foreground is usually greater than a CPU resource that needs to be used when the application program is in a sleep state in the foreground.

If a resource provided for the application program is less than a resource required by the application program in a corresponding running status, lag or the like may occur in a running process of the application program. If a resource provided for the application program is far greater than a resource required during running of the application program in a corresponding running status, a waste of resources may be caused. Therefore, in the running process of the application program, how to provide a resource for the application program is a problem that needs to be resolved.

In a related technology, the electronic device may identify a running status of application programs, and improve or reduce overall performance of the electronic device based on the running status of the application programs. For example, an operating frequency of the resource, for example, a central processing unit (Central Processing Unit, CPU), in the electronic device is increased or reduced. However, improvement of the overall performance of the electronic device increases power consumption of the electronic device, and reduction of the overall performance of the electronic device easily affects smoothness of running of the application program.

In another related technology, in the running process of the application program, the electronic device may identify key threads that are included in the application program and that have a dependency relationship, to form a related thread group (Related Thread Group, RTG for short). The key thread may be, for example, a thread used to support running of the application program or a thread used to implement a main function of the application program. The electronic device may preferentially allocate a resource to the key thread in the RTG; and not allocate, to a non-key thread (for example, a thread used to support the application program in implementing an additional function) included in the application program, a resource that needs to be added, or allocate, to the non-key thread included in the application program, only a small quantity of resources that need to be added, to reduce power consumption of the electronic device.

However, in the foregoing manner that focuses only on the key thread in the RTG, it is easy to provide excessive resources for the key thread in the RTG, causing a waste of resources. In addition, the foregoing manner does not focus on or pays less attention to the non-key thread, and a granularity of resource scheduling performed on the application program is coarse.

Based on the foregoing content, embodiments of this application provide a resource scheduling method, to dynamically adjust, on a per-thread basis of a thread included in each application program, a resource allocated by an electronic device to the application program. In the method, a level of each first thread corresponding to a first application program and a scheduling parameter corresponding to each level are set, so that a resource can be allocated to each first thread on a per-thread basis of each first thread included in the first application program. When a running status of the first application program changes, a level of each first thread in a running state may remain unchanged, and the scheduling parameter corresponding to each level is adjusted, to differently increase or reduce an allocated resource for each first thread.

The resource scheduling method provided in embodiments of this application may be applied to the electronic device. The electronic device in embodiments of this application may be a portable computer (for example, a mobile phone or a foldable-screen mobile phone), a tablet computer, a notebook computer, a personal computer (personal computer, PC), a wearable electronic device (for example, a smart watch), an augmented reality (augmented reality, AR)/virtual reality (virtual reality, VR) device, a vehicle-mounted computer, or the like. An operating system installed in the electronic device may be, for example, Android^{®}, Harmony OS^{®}, Windows^{®}, or another operating system. A specific type of the electronic device and a type of the installed operating system are not limited in this application.

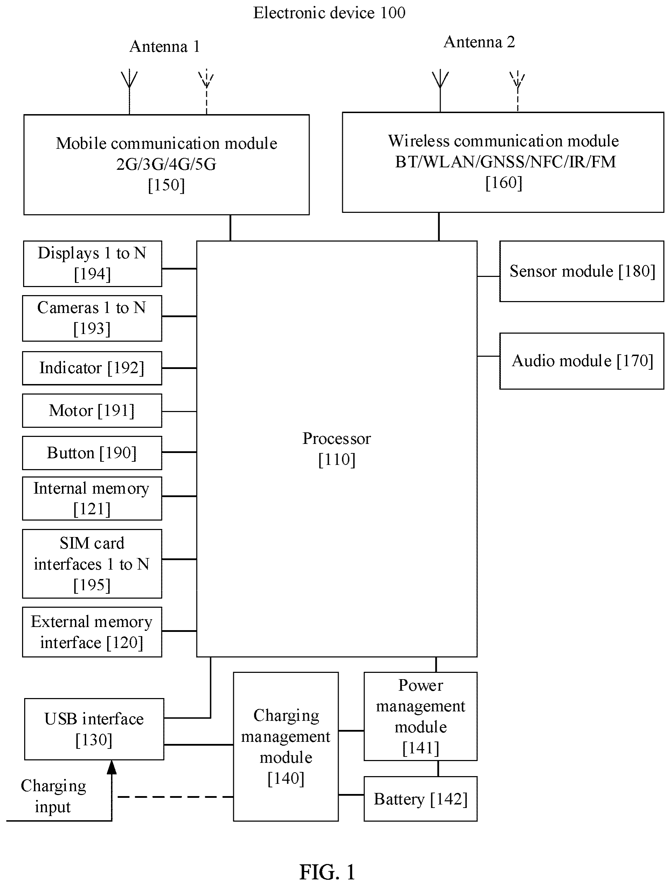

FIG. 1 is a diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, and a subscriber identity module (subscriber identity module, SIM) card interface 195.

It may be understood that the structure shown in this embodiment of the present invention does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has just been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The processor 110 runs the instructions stored in the internal memory 121, to perform various functional applications and data processing of the electronic device 100. The internal memory 121 may include a program storage area and a data storage area. The program storage area may store an operating system, an application program required by at least one function (for example, a sound playing function or an image playing function), and the like. The data storage area may store data (for example, audio data, and a phone book) created in a process of using the electronic device 100, and the like. In addition, the internal memory 121 may include a high-speed random access memory, and may further include a nonvolatile memory, for example, at least one magnetic disk storage component, a flash memory component, or a universal flash storage (universal flash storage, UFS).

Hardware resources such as the processor 110, the sensor module 180, the motor 191, and the internal memory 121 in FIG. 1 may be allocated to at least one thread corresponding to an application program in the electronic device when the application program is run, so that each thread corresponding to the application program is run.

A software system of the electronic device 100 may use a layered architecture, an event-driven architecture, a microkernel architecture, a micro service architecture, or a cloud architecture. In embodiments of the present invention, an Android system with a layered architecture is used as an example to describe a software structure of the electronic device 100.

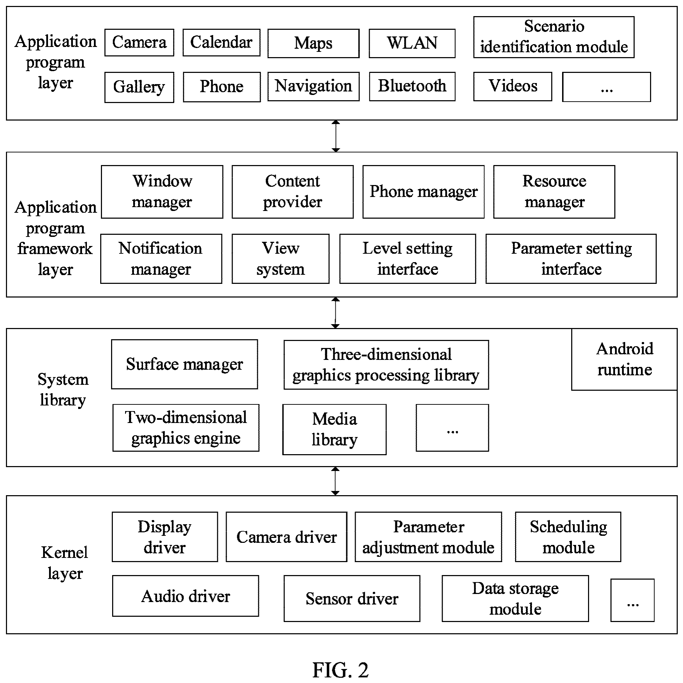

FIG. 2 is a block diagram of the software structure of the electronic device 100 according to an embodiment of the present invention.

In the layered architecture, software is divided into several layers, and each layer has a clear role and task. The layers communicate with each other through a software interface. In some embodiments, the Android system is divided into four layers: an application program layer, an application program framework layer, an Android runtime (Android runtime) and system library, and a kernel layer from top to bottom.

The application program layer may include a series of application program packages.

As shown in FIG. 2, the application program packages may include application programs such as Camera, Gallery, Calendar, Call, Map, Navigation, WLAN, Bluetooth, and Videos. The application program layer may further include a scenario identification module configured to detect a running status of the application programs.

The application program framework layer provides, for the application programs at the application program layer, a programming framework and application programming interfaces (application programming interfaces, APIs), for example, a level setting interface configured to set a corresponding thread level and a parameter setting interface configured to set a corresponding level. The application program framework layer includes some predefined functions.

As shown in FIG. 2, the application program framework layer may include a window manager, a content provider, a view system, a phone manager, a resource manager, a notification manager, the level setting interface, the parameter setting interface, and the like.

The window manager is configured to manage a window program. The window manager may obtain a size of the display, determine whether there is a status bar, perform screen locking, take a screenshot, and so on.

The content provider is configured to store and obtain data, and enable the data to be accessed by an application program. The data may include a video, an image, audio, calls that are made and received, a browsing history and a browsing bookmark, an address book, and the like.

The view system includes visual controls such as a control for displaying a text and a control for displaying a picture. The view system may be configured to construct an application program. A display interface may include one or more views. For example, a display interface including a short messaging service message notification icon may include a text display view and a picture display view.

The phone manager is configured to provide a communication function for the electronic device 100, for example, management of a call status (including answering, declining, or the like).

The resource manager provides various resources such as a localized character string, an icon, a picture, a layout file, and a video file for an application program.

The notification manager enables an application program to display notification information in a status bar, and may be configured to convey a notification message. The notification information may automatically disappear after a short pause without requiring a user interaction. For example, the notification manager is configured to notify download completion and provide a message prompt. The notification manager may alternatively provide a notification that appears in a top status bar of the system in a form of a graph or a scroll bar text, for example, a notification of an application program running in a background, or may provide a notification that appears on a screen in a form of a dialog window. For example, text information is prompted in the status bar, a prompt tone is made, the electronic device vibrates, or an indicator light blinks.

The level setting interface is an interface configured to set a thread level corresponding to an application program.

The parameter setting interface is an interface configured to set scheduling parameters corresponding to different levels set by the level setting interface.

The Android runtime includes a kernel library and a virtual machine. The Android runtime is responsible for scheduling and management of the Android system.

The kernel library includes two parts: a function that needs to be called in Java language and a kernel library of Android.

The application program layer and the application program framework layer are run on the virtual machine. The virtual machine executes Java files at the application program layer and the application program framework layer as binary files. The virtual machine is configured to implement functions such as object life cycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of application programs.

The media library supports playing and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a sensor driver, a parameter adjustment module, a scheduling module, and a data storage module.

The parameter adjustment module is configured to adjust the scheduling parameter. The scheduling module is configured to allocate a hardware resource to a corresponding thread based on the scheduling parameter. The data storage module is configured to store running data of each application program.

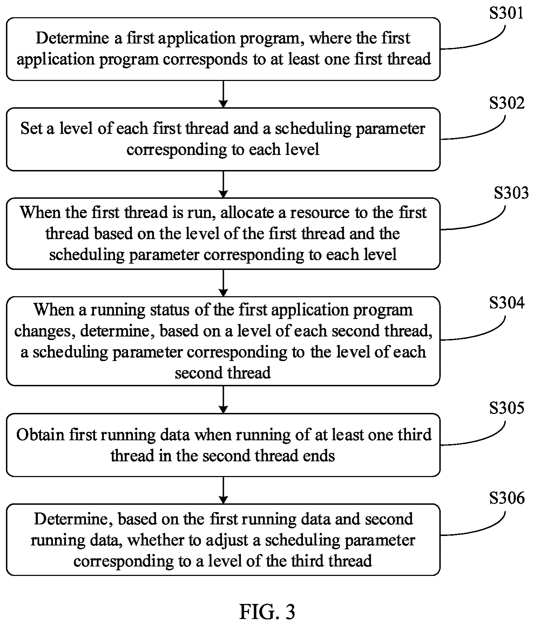

The following describes the resource scheduling method provided in embodiments of this application. As shown in FIG. 3, the method may include the following steps S301 to S306.

S301: Determine a first application program, where the first application program corresponds to at least one first thread.

The first application program corresponds to one application process. The application process of the first application program is a program process corresponding to the first application program, namely, an active instruction set corresponding to the first application program in a system. The application process of the first application program may include only one thread, for example, a key thread used to support running of the first application program or implement a main function of the first application program. The application process of the first application program may alternatively include a plurality of threads, for example, the key thread and at least one non-key thread used to implement an additional function of the first application program.

For example, when the first application program is an application program used to play a video, the first thread corresponding to the first application program may be a first thread (the thread may be a key thread) used to execute image display. Alternatively, the first thread corresponding to the first application program may be a first thread (the thread may be a non-key thread) used to execute audio playing. Alternatively, the first thread corresponding to the first application program may be a first thread (the thread may also be a non-key thread) used to execute bullet screen display, or the like.

When the first application program is run, running of the key thread corresponding to the first application program is started, and each non-key thread corresponding to the first application program may be run or may not be run.

S302: Set a level of each first thread and a scheduling parameter corresponding to each level.

The scheduling parameter is a parameter associated with resource allocation, and may be used to allocate a resource to a thread having the corresponding level. For example, the scheduling parameter is a nice parameter associated with a priority of the target thread. A value of the nice parameter being smaller indicates that a priority of the target thread is higher, so that the target thread can be executed in advance, and more resources can be obtained by the target thread. For another example, the scheduling parameter is a uclamp parameter associated with CPU usage of the target thread.

The resource in embodiments of this application may include hardware resources such as a CPU, a GPU, an input/output device (I/O device), and a memory of an electronic device. Specific content included in the resource is not limited in embodiments of this application.

In some embodiments, a user may input a first setting operation on the electronic device based on a degree of importance of each first thread relative to the first application program, to indicate the electronic device to set the level of each first thread.

For example, when the first application program is an application program used to play music, the first application program may correspond to a first thread used to execute a playing service, a first thread used to display a playing special effect, a first thread used to display lyrics, a first thread used to display a comment related to the music, and the like. The user may input a first setting operation on the electronic device based on a degree of importance of each first thread relative to the first application program, to indicate the electronic device to set a level corresponding to the first thread used to display the comment related to the music to a first level, a level corresponding to the first thread used to display the playing special effect to a second level, a level corresponding to the first thread used to display the lyrics to a third level, and a level corresponding to the first thread used to execute the playing service to a fourth level. A level corresponding to a first thread being higher indicates that a degree of importance of the first thread relative to the first application program is higher, in other words, during running of the first application program, a probability of creating and running the first thread is higher.

It may be understood that the level in embodiments of this application is a relative level of each first thread corresponding to the first application program. For example, the first application program includes a first thread 1 corresponding to a first level, a first thread 2 corresponding to a second level, and a first thread 3 corresponding to a third level. A second application program different from the first application program includes a first thread a corresponding to a first level, a first thread b corresponding to a second level, and a first thread c corresponding to a third level. The first level corresponding to the first thread 1 has a different meaning from the first level corresponding to the first thread a.

In some embodiments, the user may input a second setting operation to the electronic device, to indicate the electronic device to set a scheduling parameter corresponding to the level of each first thread.

For example, the first application program corresponds to seven first threads, and levels corresponding to the first threads are set to be different, that is, a total of seven levels (a level 1 to a level 7) are set. Refer to Table 1.

**Table 1**

| | First parameter | Second parameter | Third parameter | Fourth parameter |
|---|---|---|---|---|
| Level 1 | 0 | 0 | 1024 | 1 |
| Level 2 | 10 | 0 | 200 | 1 |
| Level 3 | 5 | 0 | 250 | 1 |
| Level 4 | 0 | 0 | 1024 | 2 |
| Level 5 | -5 | 300 | 1024 | 2 |
| Level 6 | -10 | 500 | 1024 | 2 |
| Level 7 | -10 | 500 | 1024 | 3 |

The first parameter, the second parameter, the third parameter, and the fourth parameter are all scheduling parameters. When the first application program is run, a level of a first thread in a running state may be determined based on Table 1. In addition, a resource is allocated to each first thread based on a scheduling parameter corresponding to a level of each first thread.

In the foregoing example, the levels of the first threads corresponding to the first application program are different. During actual application, in first threads corresponding to the first application program, at least two first threads may alternatively correspond to a same level. For example, the first application program corresponds to a first thread 1, a first thread 2, a first thread 3, a first thread 4, and a first thread 5. A level corresponding to the first thread 1 is a level 7, levels corresponding to the first thread 2 and the first thread 3 are both a level 5, and levels corresponding to the first thread 4 and the first thread 5 are both a level 1.

In some embodiments, to prevent a developer of a third-party application program from setting a high level for a non-key thread of the third-party application program to preempt a resource and therefore cause resource contention between running threads, a corresponding first permission mechanism may be set. The first permission mechanism is that the developer of the third-party application program is only allowed to set a level of a thread below a level threshold. For example, the level threshold is a fourth level. In this case, the permission mechanism is that the developer of the third-party application program is only allowed to set a level of a thread to a first level, a second level, or a third level (the first level, the second level, or the third level is lower than the fourth level).

In some embodiments, a second permission mechanism may be further set. The second permission mechanism is that the user is only allowed to set, in a preset scenario, the level of each first thread and the scheduling parameter corresponding to each level. The preset scenario may include a scenario in which the electronic device fails to automatically set the level of each first thread and the scheduling parameter corresponding to each level, or the like. This is not limited in embodiments of this application.

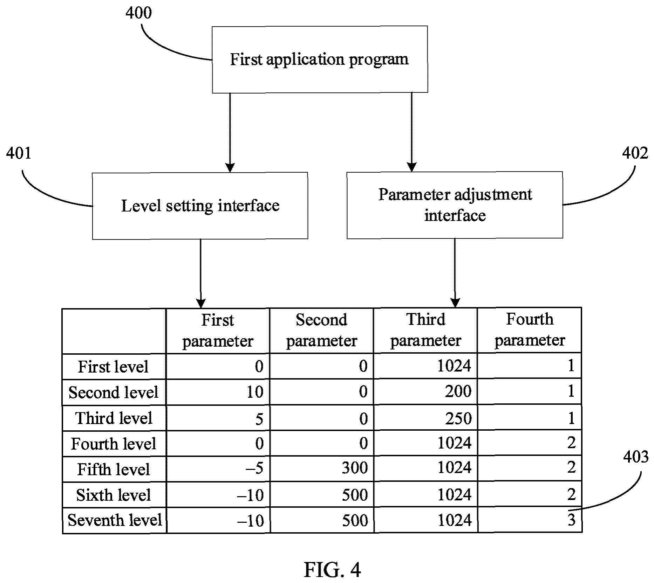

In some embodiments, with reference to FIG. 4, a level setting interface 401 and a parameter setting interface 402 may be provided to the user. The user may input the first setting operation on the electronic device, to set, through the level setting interface 401, the level of each first thread corresponding to the first application program 400. In addition, the user may input the second setting operation to the electronic device, to set, through the parameter setting interface 402, the scheduling parameter corresponding to each level. A scheduling table 403 may be generated based on the level of each first thread and the scheduling parameter corresponding to each level that are set by the user. Then, the electronic device may store the scheduling table 403 in the memory. When detecting that a first thread is run, the electronic device may directly invoke the scheduling table 403, to allocate a resource to the running first thread based on a level corresponding to the first thread and a scheduling parameter corresponding to the level in the scheduling table 403.

S303: When the first thread is run, allocate a resource to the first thread based on the level of the first thread and the scheduling parameter corresponding to each level.

In embodiments of this application, the first thread in the running state may be referred to as a second thread.

In some embodiments, the user may tap the first application program displayed on the electronic device, to input, to the electronic device, an instruction used to instruct to start the first application program. The electronic device starts the first application program in response to the instruction that is input by the user and that is used to instruct to start the first application program, and runs at least one second thread used to support running of the first application program.

After detecting that the second thread corresponding to the first application program is run, the electronic device may obtain a level of the second thread. The electronic device may determine, based on the level of the second thread, a scheduling parameter used to allocate a resource to the second thread. Then, the electronic device allocates the resource to the corresponding second thread based on the determined scheduling parameter.

For example, the electronic device detects that running of a second thread 1, a second thread 2, and a second thread 3 is all started. A level that is obtained by the electronic device and that corresponds to the second thread 1 is the level 3 in Table 1. Levels corresponding to the second thread 2 and the second thread 3 are the level 1 in Table 1. The electronic device may invoke the scheduling parameter corresponding to the level 3 in Table 1, and allocate a resource to the second thread 1 based on the scheduling parameter. In addition, the electronic device may invoke the scheduling parameter corresponding to the level 1 in Table 1, and allocate resources to the second thread 2 and the second thread 3 based on the scheduling parameter.

S304: When a running status of the first application program changes, determine, based on a level of each second thread, a scheduling parameter corresponding to the level of each second thread.

The running status of the first application program is a first state before change, and is a second state after change, where the first state is different from the second state.

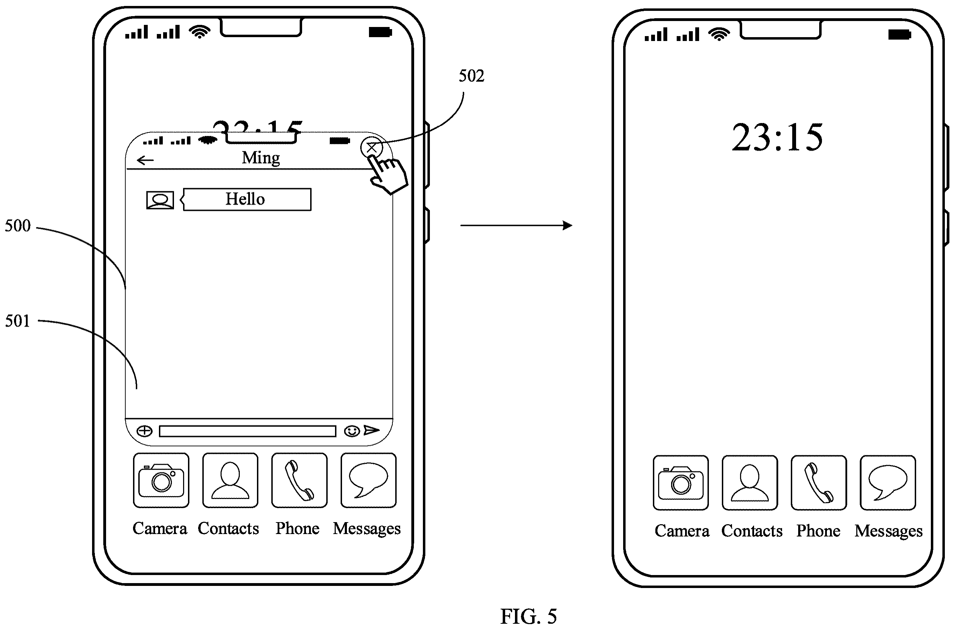

For example, the running status of the first application program may include a foreground state and a background state. With reference to FIG. 5, when the running status of the first application program 500 is the foreground state, a display of the electronic device may display an application interface 501 of the first application program. The application interface 501 includes a close control 502 used to close the application interface 501. The user may tap the close control 502 to input, to the electronic device, a switching instruction used to instruct to switch the running status of the first application program 500. After detecting the tap operation of the user on the close control 502, that is, after receiving the switching instruction input by the user, the electronic device may close the application interface 501, and switch the running status of the application program from the foreground state to the background state.

It may be understood that the foreground state and the background state are merely examples of the running status of the first application program in embodiments of this application. The running status of the first application program may further include various states such as a game state, a standby state, a chat state, and an energy saving state. The running status of the first application program is not limited in embodiments of this application.

In some embodiments, the first application program stores the level corresponding to each first thread and the scheduling parameter corresponding to each level. When the running status of the first application program changes, the first application program may determine, based on the first state, the second state, and the level corresponding to each second thread, the scheduling parameter corresponding to the level of each second thread. Then, the first application program may apply, based on the determined scheduling parameter corresponding to the level of each second thread, to the electronic device for increasing or reducing a resource allocated to each second thread.

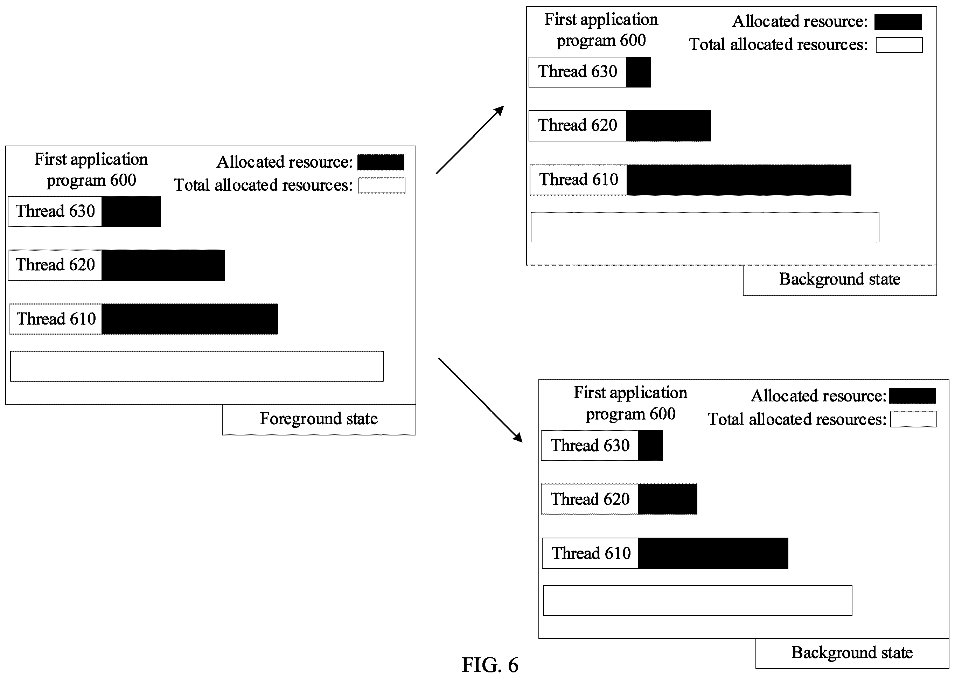

For example, with reference to FIG. 6, when the first application program 600 is an application program used to play music, the first application program 600 corresponds to a thread 610 (corresponding to a seventh level) used to execute a playing service, a thread 620 (corresponding to a third level) used to display a playing special effect, and a thread 630 (corresponding to a first level) used to display lyrics.

When the first application program is run in a foreground, the thread 610, the thread 620, and the thread 630 are all executed. When the running status of the first application program is switched from the foreground state to the background state, the first application program may separately adjust, based on the foreground state and the background state of the first application program and levels (the seventh level, the third level, and the first level) corresponding to the thread 610, the thread 620, and the thread 630, parameters corresponding to the seventh level, the third level, and the first level.

In this example, when the first application program is in the background state, the electronic device does not display the playing feature and the lyrics. Therefore, to reduce power consumption of the electronic device, scheduling parameters corresponding to the third level and the first level may be adjusted, to reduce resources allocated to the thread 620 and the thread 630. When the first application program is in the background state, the electronic device still plays the music. Therefore, to improve a playing effect of the music, a scheduling parameter corresponding to the seventh level may also be adjusted, to increase a resource allocated to the thread 610. Because the resources allocated to the thread 620 and the thread 630 are reduced, and the resource allocated to the thread 610 is increased, total resources allocated to the thread 610, the thread 620, and the thread 630 may be reduced or increased compared to those before the running status of the first application program changes.

In this example, to further reduce the power consumption of the electronic device, the scheduling parameters corresponding to the seventh level, the third level, and the first level may be adjusted, so that resources allocated to the thread 610, the thread 620, and the thread 630 are all reduced. A same quantity of resources may be reduced for the thread 610, the thread 620, and the thread 630. Alternatively, the resources allocated to the thread 610, the thread 620, and the thread 630 may be proportionally reduced based on the levels respectively corresponding to the thread 610, the thread 620, and the thread 630. For example, the level of the thread 610 is the highest, and therefore the resource allocated to the thread 610 is reduced by 10%; the level of the thread 620 is lower than the level of the thread 610, and therefore the resource allocated to the thread 620 is reduced by 20%; and the level of the thread 630 is lower than the level of the thread 620, and therefore the resource allocated to the thread 630 is reduced by 30%. A reduction proportion of a resource allocated to each thread is not limited in embodiments of this application.

In addition, because the resources allocated to the thread 610, the thread 620, and the thread 630 are all reduced, the total resources allocated to the thread 610, the thread 620, and the thread 630 are also reduced compared to those before the running status of the first application program changes, so that the power consumption and a resource loss can be reduced for the electronic device.

In some embodiments, the electronic device stores the level corresponding to each first thread and the scheduling parameter corresponding to each level. The electronic device may monitor in real time whether the running status of the first application program changes. When detecting that the running status of the first application program changes, the electronic device may determine, based on the first state, the second state, and the level corresponding to each second thread, the scheduling parameter corresponding to the level of each second thread. Then, the electronic device may increase or reduce, based on the determined scheduling parameter corresponding to the level of each second thread, the resource allocated to each second thread.

For a manner in which the electronic device determines the scheduling parameter corresponding to the level of each second thread, refer to the manner in which the first application program determines the scheduling parameter corresponding to the level of each second thread in the foregoing embodiment. Details are not described herein again.

S305: Obtain first running data when running of at least one third thread in the second thread ends.

The first running data is associated with the third thread, and the first running data includes running data of the first application program in a current running process of the third thread.

For example, when the third thread is a thread used to implement image display of the first application program, the first running data may include a frame loss rate of the first application program in the running process of the third thread. When the third thread is a thread used to implement interaction between the first application program and the user, the first running data may include response delay data of the first application program in the running process of the third thread. When the third thread is a thread used to implement a compression/decompression function of the first application program, the first running data may include a compression rate/decompression rate of the first application program for a target file in the running process of the third thread. Specific content included in the first running data is not limited in embodiments of this application.

S306: Determine, based on the first running data and second running data, whether to adjust a scheduling parameter corresponding to a level of the third thread.

The second running data is associated with the third thread, and the second running data is obtained based on running data of the first application program in a historical running process of the third thread.

In some embodiments, each time running of the third thread ends, running data of the first application program in a running process of the third thread may be obtained. In addition, the running data is stored into a performance data file corresponding to the first application program. The second running data may be generated based on the running data stored in the performance data file.

The second running data may be obtained based on all running data stored in the performance data file. Alternatively, the second running data may be obtained based on running data that is stored in the performance data file in the most recent one or more times (for example, the most recent time or the most recent five times, which may also be referred to as a preset periodicity). Alternatively, the second running data may be obtained based on a preset quantity (for example, five) of pieces of running data randomly extracted from the performance data file. This is not limited in embodiments of this application.

In some embodiments, normalization is performed on the first running data to obtain a first value. Normalization is performed on the second running data to obtain a second value. A ratio of the first value to the second value may be determined as a third value. Whether to adjust the scheduling parameter corresponding to the level of the second thread may be determined based on the third value.

In some embodiments, when the third value is greater than or equal to a preset fourth value, the scheduling parameter corresponding to the level of the third thread may be adjusted, to increase resource supply for the third thread when the third thread is run. In addition, a larger third value indicates a higher speed of resource supply for the third thread when the third thread is run.

In some embodiments, when the third value is greater than a preset fifth value and less than the fourth value, the scheduling parameter corresponding to the level of the third thread may not be adjusted.

In some embodiments, when the third value is less than or equal to the fifth value, the scheduling parameter corresponding to the level of the third thread may be adjusted, to reduce resource supply for the third thread when the third thread is run. In addition, a smaller third value indicates a lower speed of resource supply for the third thread when the third thread is run.

The following describes in detail, by using an example in which the first application program is an application program used to play a video, how to determine the first running data and the second running data, and how to determine whether to adjust a scheduling parameter corresponding to a level of each third thread corresponding to the first application program.

A third thread is a thread used to implement image display of the first application program. After running of the third thread ends, first running data corresponding to the first application program may be obtained. The first running data includes at least a frame loss rate of the first application program in an image display process. Then, second running data may be generated based on running data stored in a performance data file. For example, the second running data includes frame loss rates that are of the first application program in image display processes for the most recent ten times and that are obtained from the performance storage file. Normalization is separately performed on the first running data and the second running data, to obtain a first value and a second value. A third value may be obtained based on a ratio of the first value to the second value.

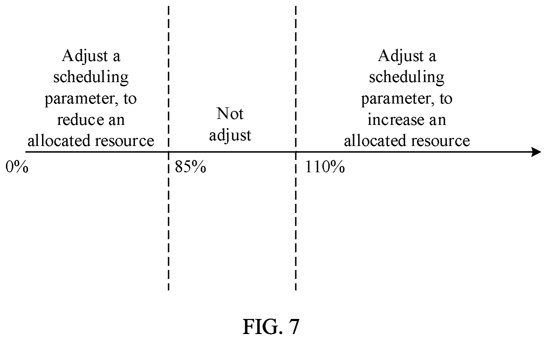

With reference to FIG. 7, when the third value is greater than or equal to 110%, it indicates that a frame loss rate of a display image of the first application program during current running of the third thread is far greater than a frame loss rate of a display image of the first application program during historical running of the third thread. Therefore, a scheduling parameter corresponding to a level of the third thread needs to be adjusted, to increase resource supply for the third thread when the third thread is run. In addition, a larger third value indicates a higher speed of resource supply for the third thread.

When the third value is between 85% and 110%, it indicates that the frame loss rate of the display image of the first application program during current running of the third thread is close to the frame loss rate of the display image of the first application program during historical running of the third thread. Therefore, the scheduling parameter corresponding to the level of the third thread may not be adjusted.

When the third value is less than or equal to 85%, it indicates that the frame loss rate of the display image of the first application program during current running of the third thread is far less than the frame loss rate of the display image of the first application program during historical running of the third thread. Therefore, the scheduling parameter corresponding to the level of the third thread may be adjusted, to reduce resource supply for the third thread when the third thread is run. In addition, a smaller third value indicates a lower speed of resource supply for the third thread.

In embodiments of this application, the first application program is used as an example to describe the resource scheduling method provided in this application. During actual application, the resource scheduling method provided in embodiments of this application may be further applied to the second application program, a third application program, and another application program that are different from the first application program. When the resource scheduling method provided in embodiments of this application is applied to the second application program, a level may also be set for each thread corresponding to the second application program, and a corresponding scheduling parameter may also be set for each level. The level set for each thread corresponding to the second application program and the scheduling parameter set for each level may be the same as or different from those of the first application program.

For example, the first application program corresponds to seven threads, and the threads respectively correspond to the level 1 to the level 7 shown in Table 1. The second application program may also correspond to seven threads, and the threads may also respectively correspond to a level 1 to a level 7. The level 1 of the thread corresponding to the first application program has a same name as the level 1 of the thread corresponding to the second application program. However, scheduling parameters corresponding to the two levels 1 may be the same or may be different. This is not limited in embodiments of this application.

Embodiments of this application provide a resource scheduling method and an electronic device. Through setting of the level of each first thread corresponding to the first application program and the scheduling parameter corresponding to each level, the resource can be allocated to each first thread on a per-thread basis of each first thread included in the first application program. When the running status of the first application program changes, the level of the second thread in the running state in the first thread may remain unchanged, and the scheduling parameter corresponding to each level is adjusted, to differently increase or reduce an allocated resource for each second thread. After running of the third thread in the second thread ends, whether to adjust the scheduling parameter corresponding to the level of the third thread may be determined based on the first running data corresponding to the first application program in the current running process of the third thread and the second running data, so that precision of the scheduling parameter can be improved. The second running data is obtained based on the running data corresponding to the first application program in the historical running process of the third thread.

In some solutions, a plurality of embodiments of this application may be combined, and a combined solution is implemented. Optionally, some operations in the procedure of the method embodiment are randomly combined, and/or a sequence of some operations is randomly changed. In addition, an execution sequence between steps of each procedure is merely an example, and does not constitute a limitation on an execution sequence between the steps. The steps may alternatively be performed in another execution sequence. It is not intended to indicate that the execution sequence is the only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

Moreover, some steps in the method embodiment may be equivalently replaced with other possible steps. Alternatively, some steps in the method embodiment may be optional, and may be deleted in some use scenarios. Alternatively, another possible step may be added to the method embodiment.

In addition, method embodiments may be implemented separately or in combination.

It may be understood that, to implement the foregoing functions, the electronic device includes a corresponding hardware module and/or a corresponding software module for performing each function. With reference to the example algorithm steps described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the electronic device may be divided into functional modules based on the foregoing method examples. For example, each functional module may be obtained through division based on each corresponding function, or two or more functions may be integrated into one processing module. The integrated module may be implemented in a form of hardware. It should be noted that, in embodiments, division into the modules is an example and is merely logical function division, and may be other division during actual implementation.

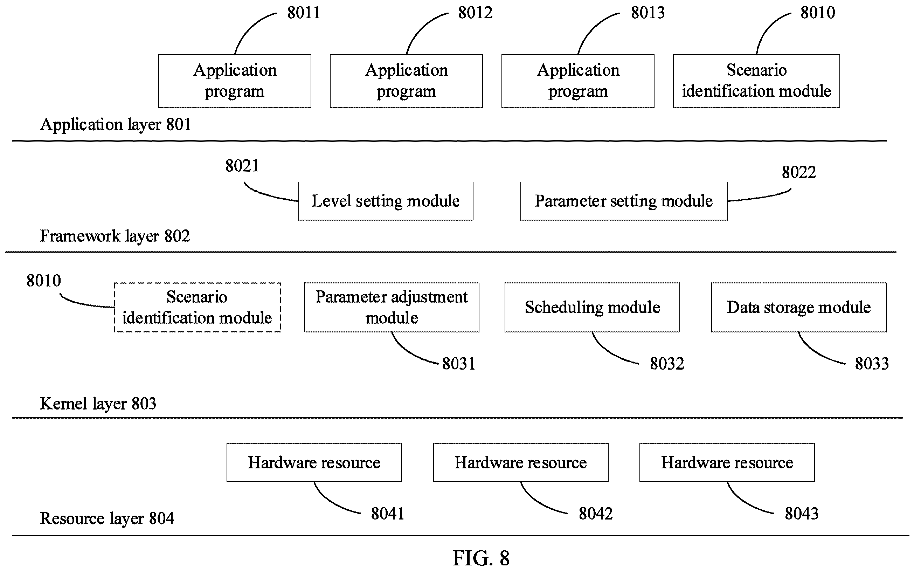

For example, an embodiment of this application further provides a resource scheduling system. As shown in FIG. 8, the system includes an application layer 801, a framework layer 802, a kernel layer 803, and a resource layer 804. The application layer may include a plurality of application programs, for example, an application program 8011, an application program 8012, and an application program 8013. The application layer 801 may further include a scenario identification module 8010. The scenario identification module 8010 is configured to monitor a running status of each application program at the application layer.

In some embodiments, the scenario identification module 8010 may be further located in the kernel layer 803. In some other embodiments, scenario identification modules 8010 may exist in both the application layer 801 and the kernel layer 803.

The framework layer 802 includes a level setting module 8021 and a parameter setting module 8022. A level of a thread corresponding to each application program may be set based on the level setting module 8021. A scheduling parameter corresponding to each level may be set based on the parameter setting module 8022.

The kernel layer 803 includes a parameter adjustment module 8031, a scheduling module 8032, and a data storage module 8033. The resource layer 804 includes at least one hardware resource (for example, a hardware resource 8041, a hardware resource 8042, and a hardware resource 8043 in FIG. 8).

The parameter adjustment module 8031 is configured to adjust the scheduling parameter corresponding to each level. The scheduling module 8032 is configured to allocate a hardware resource to the thread of each application program based on a corresponding scheduling parameter. The data storage module 8033 is configured to store running data of each application program in a running process of each thread.

The resource scheduling system shown in FIG. 8 may perform all steps of the resource scheduling method provided in embodiments of this application.

For example, with reference to the system in FIG. 8, a level of each thread corresponding to the application program 8011 may be preset based on the level setting module 8021, and a scheduling parameter corresponding to each level may be set based on the parameter setting module 8022. After the application program 8011 is run, running of at least one thread corresponding to the application program 8011 is also started. The scheduling module 8032 may obtain a level corresponding to the thread and a scheduling parameter corresponding to the level, and allocate a corresponding hardware resource to the thread based on the obtained scheduling parameter.

After the scenario identification module 8010 located at the application layer 801 and/or the scenario identification module 8010 located at the kernel layer 803 detect/detects that a running status of the application program 8011 changes, the parameter adjustment module 8031 may adjust the scheduling parameter corresponding to the level of the thread. Then, the scheduling module 8032 may adjust, based on an adjusted scheduling parameter, the hardware resource allocated to the thread.

After running of the thread is completed, the parameter adjustment module 8031 may obtain first running data corresponding to the application program 8011 in a current running process of the thread, and obtain second running data based on running data that corresponds to the application program 8011 in a historical running process of the thread and that is obtained from the data storage module 8033. Based on the first running data and the second running data, the parameter adjustment module 8031 may determine whether to adjust the scheduling parameter corresponding to the level of the thread.

In addition, after running of the thread is completed, the first running data corresponding to the application program 8011 in the current running process of the thread may also be stored in the data storage module 8033.

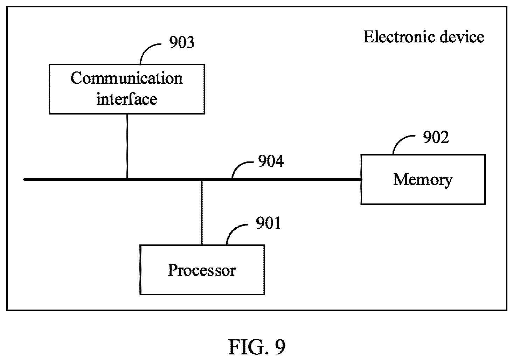

An embodiment of this application further provides an electronic device. As shown in FIG. 9, the electronic device may include one or more processors 901, a memory 902, and a communication interface 903.

The memory 902, the communication interface 903, and the processor 901 are coupled to each other. For example, the memory 902, the communication interface 903, and the processor 901 may be coupled through a bus 904.

The communication interface 903 is configured to perform data transmission with another device. The memory 902 stores computer program code. The computer program code includes computer instructions. When the computer instructions are executed by the processor 901, the electronic device is enabled to perform the resource scheduling method in embodiments of this application.

The processor 901 may be a processor or a controller, for example, a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor may implement or execute various example logical blocks, modules, and circuits described with reference to content of this disclosure. The processor may alternatively be a combination of processors implementing a computing function, for example, a combination of one or more microprocessors, or a combination of a DSP and a microprocessor. The processor may be configured to support the electronic device in performing the method steps provided in the foregoing embodiment. For example, the processor may be configured to support the electronic device in performing S301 to S306 in FIG. 3.

The bus 904 may be a peripheral component interconnect (Peripheral Component Interconnect, PCI) bus, an extended industry standard architecture (Extended Industry Standard Architecture, EISA) bus, or the like. The bus 904 may be classified as an address bus, a data bus, a control bus, or the like. For ease of representation, only one thick line is used to represent the bus in FIG. 9, but this does not mean that there is only one bus or only one type of bus.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

It should be understood that the steps in the foregoing method embodiment may be completed by using an integrated logic circuit of hardware in the processor or instructions in a form of software. The method steps disclosed with reference to embodiments of this application may be directly performed and completed by a hardware processor, or may be performed and completed by using a combination of hardware in the processor and a software module.

An embodiment of this application further provides a computer-readable storage medium. The computer storage medium stores computer program code. When a processor executes the computer program code, an electronic device performs related method steps in the foregoing method embodiment.

An embodiment of this application further provides a computer program product. When the computer program product runs on a computer, the computer is enabled to perform related method steps in the foregoing method embodiment.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the scenario configuration method in the foregoing method embodiment.

The apparatus, the computer-readable storage medium, the computer program product, or the chip provided in embodiments of this application is configured to perform the corresponding method provided above. Therefore, for beneficial effects that can be achieved, refer to beneficial effects in the corresponding method provided above. Details are not described herein again.

Method or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well known in the art. For example, the storage medium is coupled to a processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC).

The foregoing descriptions of the implementations allow a person skilled in the art to clearly understand that, for the purpose of convenient and brief description, division into the functional modules is merely used as an example for description. During actual application, the foregoing functions may be allocated to different functional modules for implementation as required. In other words, an inner structure of the apparatus is divided into different functional modules to implement all or some of the functions described above. For a detailed working process of the foregoing system, apparatus, and unit, refer to a corresponding process in the foregoing method embodiment. Details are not described herein again.

In several embodiments provided in this application, it should be understood that the disclosed apparatuses and method may be implemented in other manners. For example, the described apparatus embodiments are merely examples. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

## Claims

1. A resource scheduling method, comprising:
determining a level of at least one first thread when detecting that a running status of a first application program is switched from a first state to a second state, wherein the at least one first thread is used to run the first application program, and the level is a relative level of each first thread corresponding to the first application program;
determining, based on the level of the first thread, a scheduling parameter corresponding to each level, wherein the scheduling parameter is used to allocate a resource to the first thread having the corresponding level, and scheduling parameters corresponding to different levels are different; and
allocating the resource to the first thread based on the scheduling parameter corresponding to the level of the first thread.

2. The method according to claim 1, wherein the first thread is a thread that is in a running state and that corresponds to the first application program.

3. The method according to claim 1 or 2, wherein the method further comprises:
obtaining first running data when running of the first thread ends, wherein the first running data is associated with the first thread, and the first running data comprises running data of the first application program in a current running process of the first thread; and
adjusting, based on the first running data and second running data, the scheduling parameter corresponding to the level of the first thread, wherein the second running data is associated with the first thread, and the second running data is obtained based on running data of the first application program in a historical running process of the first thread.

4. The method according to claim 3, wherein the adjusting, based on the first running data and second running data, the scheduling parameter corresponding to the level of the first thread comprises:
determining, based on the first running data and the second running data, whether a resource needs to be reallocated to the first thread; and
when determining that the resource needs to be reallocated to the first thread, adjusting the scheduling parameter corresponding to the level of the first thread.

5. The method according to claim 3 or 4, wherein the adjusting, based on the first running data and second running data, the scheduling parameter corresponding to the level of the first thread comprises:
performing normalization on the first running data to obtain a first value;
performing normalization on the second running data to obtain a second value;
determining a ratio of the first value to the second value as a third value; and
when the third value is greater than or equal to a fourth value, or the third value is less than or equal to a fifth value, adjusting the scheduling parameter corresponding to the level of the first thread.

6. The method according to any one of claims 1 to 5, wherein before the determining a level of at least one first thread when detecting that a running status of a first application program is switched from a first state to a second state, the method further comprises:
receiving a setting operation input by a user; and
in response to the setting operation, setting the level of the at least one first thread corresponding to the first application program and a scheduling parameter corresponding to the level of the at least one first thread.

7. The method according to any one of claims 1 to 6, wherein when the first application program is a third-party application program, the level of the first thread corresponding to the first application program is less than a level threshold.

8. An electronic device, comprising a memory and one or more processors, wherein the memory is coupled to the processor; the memory stores computer program code; the computer program code comprises computer instructions; and when the computer instructions are executed by the processor, the electronic device performs the method according to any one of claims 1 to 7.

9. A computer storage medium, comprising computer instructions, wherein when the computer instructions are run on an electronic device, the electronic device is enabled to perform the method according to any one of claims 1 to 7.

10. A computer program product, wherein when the computer program product runs on a computer, the computer is enabled to perform the method according to any one of claims 1 to 7.
